# EUROPÄISCHE PATENTSCHRIFT

(11) **EP 1 151 185 B1**
(45) Veröffentlichungstag und Bekanntmachung des Hinweises auf die Patenterteilung: **04.06.2003**
(21) Anmeldenummer: 99966903.9
(22) Anmeldetag: 25.11.1999
(51) Int. Cl.: F02D 11/00, F02B 27/02

(54) **SAUGROHR MIT STELLELEMENT**
SUCTION LINE WITH CONTROL ELEMENT
TUYAU D'ASPIRATION AVEC ELEMENT DE REGLAGE

(30) Priorität: 11.02.1999 DE 19905686
(43) Veröffentlichungstag der Anmeldung: 07.11.2001
(73) Patentinhaber: FILTERWERK MANN + HUMMEL GmbH, 71631 Ludwigsburg (DE)
(72) Erfinder: JESSBERGER, Thomas, D-71277 Rutesheim (DE); PIETROWSKI, Herbert, D-74385 Pleidelsheim (DE)
(74) Vertreter: Voth, Gerhard, Dipl.-Ing.
(86) Internationale Anmeldenummer: EP9909129
(87) Internationale Veröffentlichungsnummer: WO00047881

(56) Entgegenhaltungen:
- EP-A- 0 404 073
- EP-A- 0 471 886
- US-A- 4 510 905
- PATENT ABSTRACTS OF JAPAN vol. 1995, no. 02, 31. März 1995 (1995-03-31) & JP 06 317165 A (HONDA MOTOR CO LTD), 15. November 1994 (1994-11-15)

## Beschreibung

### Stand der Technik

Die Erfindung betrifft ein Saugrohr, insbesondere zur Verwendung in einer Brennkraftmaschine, welches ein beweglich im Saugrohr angeordnetes Stellelement aufweist, nach der Gattung der Patentansprüche 1 und 5. Außerdem betrifft die Erfindung ein Verfahren zur Steuerung des besagten Stellelementes.

Solche Stellelemente sind z. B. zur Längenschaltung von Saugrohren bekannt. Sie müssen eine Stellbewegung ausführen und daher mit einem Antrieb versehen werden. Ein solcher Antrieb ist z. B. aus der DE 44 32 349 A1 bekannt. Dieser besteht aus einem Unterdrucksteller, der durch den im Innenraum des Luftsammlers herrschenden Unterdruck angetrieben werden kann. Da dieser Unterdruck nicht in jedem Betriebszustand der Brennkraftmaschine vorliegt, muß zusätzlich ein Unterdruckspeicher vorgesehen sein.

Der durch das Saugrohr zur Verfügung gestellte Unterdruck ist jedoch begrenzt. Dessen Betrag läßt sich auch nicht durch Vorsehen eines Speichers erhöhen. Andererseits müssen sich die baulichen Abmessungen des Unterdruckstellers in Grenzen halten. Dies liegt an dem zur Verfügung stehenden Einbauraum wie auch an den Herstellkosten. Die vom Unterdrucksteller zur Verfügung gestellte Stellkraf' hängt neben dem anliegenden Druck auch von der Fläche ab, an die der Druck angreift. Diese läßt sich aus den genannten Gründen jedoch nicht beliebig vergrößern. Somit ist die mögliche Stellkraft des Unterdruckstellers begrenzt.

Die Anforderung an die Dichtheit der Stellelemente oder die Notwendigkeit, mehrere Stellelemente gleichzeitig zu betätigen, können die Betätigungskräfte soweit ansteigen lassen, daß der beschriebene Unterdrucksteller damit überfordert ist.

Eine andere Möglichkeit ist die Verwendung eines Elektromotors, wie dies z. B. in der DE 197 08 212 A1 vorgeschlagen wird. Zur Erzielung der durch die Stellelemente bezweckten Effekte sind jedoch häufig auch kurze Schaltzeiten für das Stellelement notwendig. Diese können durch Getriebemotoren nicht erreicht werden. Ein elektrischer Direktantrieb, der kurze Schaltzeiten bei hohen Schaltkräften gewährleistet, kann jedoch die Anforderung an das zulässige Gewicht bzw. die Herstellkosten nicht einhalten. Außerdem besteht die Gefahr, daß bei einem Stromausfall das Stellelement in einer ungewünschten Position verbleibt, was nur verhindert werden kann, wenn ein zusätzlicher Energiespeicher zur Verfügung gestellt wird, welcher einen weiteren Kostenaufwand bewirkt.

Die Aufgabe der Erfindung besteht daher darin, einen Antrieb für ein Stellelement in einem Saugrohr zu schaffen, welcher kostengünstig in der Herstellung, einfach im Aufbau und zuverlässig in der Funktion ist, wobei hohe Schaltkräfte und kurze Schaltzeiten gleichzeitig realisiert sein sollen.

Aus der EP 0 404 073 A1 ist ein Saugrohrsystem zur Verwendung in einer Brennkraftmaschine bekannt, mit einem Sammelraum, in welchen ein Einlass mündet und welches einen zylinderseitigen Auslass aufweist, wobei ein Stellelement beweglich im Saugrohr angeordnet ist und einen Antrieb aufweist. Dieser Antrieb ist ein pneumatischer Antrieb. Die entsprechende Ansteuerung erfolgt über das Luftführungsvolumen des Ansaugtraktes.

Diese Aufgabe wird durch die Merkmale des Patentanspruches gelöst. Ferner wird gemäß Anspruch 6 ein Verfahren zur Steuerung einer Vorrichtung gemäß der Ansprüche 1 - 5 beansprucht.

### Vorteile der Erfindung

Erfindungsgemäß wird die Aufgabe dadurch gelöst, daß ein in einem Saugrohr beweglich angeordnetes Stellelement mit einem Antrieb versehen wird, welcher eine externe fluidische Energiequelle nutzt, die für einen anderen Verbraucher sowieso vorgesehen werden muß. Auf diese Weise entstehen für die Bereitstellung der Energie nur unwesentliche Zusatzkosten bei der Herstellung des Kraftfahrzeugs. Die genutzten Energiequellen sind fluidisch, d. h. hydraulisch oder pneumatisch. Hier ist z. B. an die Preßluftversorgungsanlage eines Kraftfahrzeugs, einen hydraulischen Arbeitskreislauf oder den Schmiermittelkreislauf der Brennkraftmaschine zu denken. Diese Energiequellen weisen ausnahmslos eine höhere Energiedichte auf als der im Saugrohr bei bestimmten Betriebszuständen herrschende Unterdruck. Schließt man hieran eine hydraulische Arbeitsmaschine an, so kann deren Platzbedarf wegen der höheren Energiedichte der fluidischen Energiequelle gering ausfallen. Hierdurch werden Materialkosten sowie Gewicht eingespart. Außerdem kann ein solcher Antrieb für die Stellelemente des Saugrohrs platzsparend am Saugrohrgehäuse angebracht werden.

Einer besonderen Ausführungsform gemäß wird als hydraulische Arbeitsmaschine ein Hydraulikzylinder verwendet. Dieser ist in der Lage, eine translatorische Bewegung des Stellelementes zu erzielen. Soll eine Drehbewegung erzielt werden, muß diese über ein Getriebe, insbesondere eine Kurbel, erzeugt werden. Wird Preßluft als Betätigungskraft für den Antrieb gewählt, so kann auch eine Druckdose verwendet werden. Diese kann im Vergleich zu einer den Unterdruck im Saugrohr nutzenden Unterdruckdose wesentlich kleiner dimensioniert sein, wodurch dieses Teil aus genannten Gründen wirtschaftlicher ist. Selbstverständlich ist es auch möglich, andere hydraulische Arbeitsmaschinen zur Verstellung des Stellelementes zu nutzen. Exemplarisch sei hier die Gruppe der Radialkolbenmotoren genannt, die eine rotatorische Stellbewegung auch ohne zusätzliches Getriebe zu erzeugen in der Lage sind.

Bei einer besonderen Ausführungsform der Erfindung ist als Antrieb ein Zylinder vorgesehen, der mit einer Rückstellfeder versehen ist. Die Rückstellfeder wirkt entgegen der Stellrichtung des Zylinders, der durch den anliegenden Druck der Energiequelle erzeugt wird. Entsprechend dieser Anordnung ergibt sich für den Zylinder sowie für die notwendige Zylinderansteuerung ein einfacherer Aufbau. Es muß lediglich das Fluid der Energiequelle, z. B. dem Druckspeicher unter einer Pumpe, entnommen werden, um das Stellelement zu betätigen und dem Kreislauf der Energiequelle, z. B. der Saugseite der Pumpe, zurückgeführt werden, um das Stellelement zurückzustellen. Bei der Nutzung einer pneumatischen Energiequelle kann die Betätigungsluft im Zylinder bei der Rückstellung auch in die Umgebung ausgeblasen werden.

Die Rückstellfeder kann gleichzeitig als Sicherheitselement genutzt werden. Diese kann bei einem Ausfall der Energiequelle zu einer automatischen Rückstellung des Stellelementes führen, wenn dies aus Sicherheitsgründen gewünscht ist. Durch eine solche Maßnahme kann sichergestellt werden, daß der Motor bei einem Ausfall der fluidischen Energiequelle, die weitere sicherheitsrelevante Baugruppen des Fahrzeugs antreibt, nicht die volle Leistung zur Verfügung stellen kann.

Gemäß der Erfindung wird als Energiequelle die Lenkhilfepumpe bzw. deren hydraulischer Kreislauf genutzt. Diese Kombination erweist sich insbesondere dann als zweckmäßig, wenn das im Saugrohr befindliche Stellelement zur Zuschaltung eines kurzen Leistungskanals zu den Zylindern im Saugrohr genutzt wird. Dieser Betriebszustand stellt sich nämlich nur in höheren Drehzahlbereichen der Brennkraftmaschine ein. Gerade in diesen Betriebszuständen wird jedoch kein großer Lenkeinschlag am Fahrzeug benötigt. Von diesem hängt jedoch die Leistung der Lenkhilfepumpe ab. Je größer der Lenkeinschlag, desto mehr Pumpenleistung wird benötigt. Daher steht die zur Betätigung des Stellelementes nötige Energie im höheren Drehzahlbereich zur Verfügung, ohne daß bei Verwendung der Lenkhilfepumpe als Energiequelle deren Leistung erhöht werden muß.

Gemäß einem Verfahren zur Steuerung des erfindungsgemäßen Antriebs wird vorgeschlagen, diesen in Abhängigkeit von der Drehzahl der Brennkraftmaschine zu aktivieren. Dafür wird ein Einlaßventil geöffnet, um die Energiequelle mit dem Antrieb zu verbinden und eine Betätigung des Stellelementes zu erzielen. Das Ventil bleibt so lange geöffnet, bis die Stellbewegung abgeschlossen ist. Die Rückstellung wird durch Öffnen eines anderen Ventils erreicht, welches den Ablauf des Fluids aus der Arbeitsmaschine erlaubt. Insbesondere wird die Rückstellung durch die Rückstellfeder erzielt, die das Fluid in den drucklosen Bereich des Fluidkreislaufes, der als Energiequelle dient, zurückschiebt. Bei pneumatischer Ansteuerung kann die Betätigungsluft aus dem Zylinder auch direkt in die Umgebung ausgeschoben werden, wodurch die Rücklaufleitung für das Fluid eingespart werden kann. Gemäß einer Modifikation des Verfahrens kann am Stellelement eine Lageerkennung erfolgen, die zusammen mit weiteren Motorkennwerten zur Einstellung der optimalen Position des Stellelementes verwendet wird. Die Einstellung kann stufenlos oder in diskreten Abständen erfolgen. Eine Lageerkennung ist jedoch nicht nötig, wenn das Stellelement nur zwischen zwei Ausgangslagen bewegt werden soll, die durch Anschläge oder Bewegungsgrenzen der Gesamtvorrichtung begrenzt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

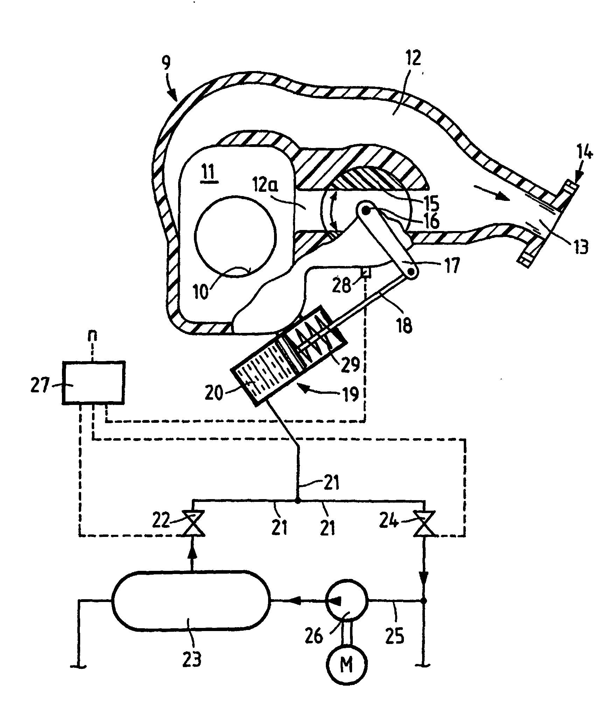

Ein Ausführungsbeispiel der Erfindung wird nachfolgend anhand der Zeichnung erläutert. Sie zeigt den Schnitt entlang eines der Saugkanäle eines Saugrohrs mit Stellelement, wobei ein Hydraulikzylinder als Antrieb angegliedert ist.

### Beschreibung der Ausführungsbeispiele

Das in der Figur dargestellte Saugrohr 9 weist einen Einlaß 10 auf, der in einen Sammelraum 11 mündet. Von dort führen lange Saugkanäle 12 und kurze Saugkanäle 12a zu einem Auslaß 13, der als Zylinderkopfflansch 14 zur Anbindung des Saugrohrs an den Motor ausgeführt ist. Im kurzen Saugkanal 12a ist ein Stellelement 15 in Form einer Stellwalze angebracht. Dieses Stellelement durchläuft alle kurzen Saugkanäle 12a, wobei diese auch vor und hinter der Zeichenebene angeordnet sind. Eine Welle 16 des Stellelements durchstößt die Saugrohrwand und trägt eine Kurbel 17, die durch eine Schubstange 18 eines hydraulischen Zylinders 19 angetrieben wird. Der Zylinder weist einen Arbeitsraum 20 auf, der mit einer Druckleitung 21 in Verbindung steht. Die Druckleitung weist ein Einlaßventil 22 auf, welches mit einem Druckspeicher 23 in Verbindung steht. In einer Verzweigung der Druckleitung 21 ist weiterhin ein Auslaßventil 24 vorgesehen, welches mit einer Saugleitung 25 einer Lenkhilfpumpe 26 verbunden ist, wobei die Pumpe Teil des hydraulischen Kreislaufs, der Lenkhilfe ist, zu dem auch der Druckspeicher 23 gehört.

Der Antrieb wird durch eine Steuerung 27 betrieben. Diese verarbeitet ein Drehzahlsignal n der Brennkraftmaschine und steuert davon abhängig das Einlaßventil 22 und das Auslaßventil 24 an. Durch Öffnen des Einlaßventils füllt sich der Arbeitsraum 20 des Zylinders 19 mit Öl, wodurch die Schubstange 18 ausgetrieben wird und über die Kurbel 17 eine Drehung des Stellelementes 15 bewirkt. Am Saugrohr 9 ist ein Lageerkennungssensor 28 angebracht, dessen Signale eine stufenlose oder mehrstufige Einstellung des Stellelementes erlauben. Der Lageerkennungssensor 28 ist ebenfalls mit der Steuerung 27 verbunden.

Eine Rückstellung des Stellelementes erfolgt durch Öffnen des Auslaßventils 24. Mit Hilfe einer Rückstellfeder 29, die im Zylinder 19 angeordnet ist, wird das Arbeitsfluid aus dem Arbeitsraum 20 des Zylinders herausgedrückt und gelangt wieder in den hydraulischen Kreislauf.

Die Drehbewegungen des Stellelements führen zu einem vollständigen oder partiellen Verschluß des kurzen Saugkanals 12a. Auf diese Weise wird die Ansaugcharakteristik des Saugrohrs in Abhängigkeit des Betriebszustandes der Brennkraftmaschine modifiziert.

## Patentansprüche

1. Saugrohrsystem, insbesondere zur Verwendung für eine Brennkraftmaschine, umfassend einen in einen Sammelraum (11 ) mündenden Einlass (10) für die Verbrennungsluft, mindestens einen zylinderseitigen Auslass (13), der durch mindestens einen Saugkanal (12, 12a) mit dem Sammelraum verbunden ist, wobei ein Stellelement (15) beweglich im Saugrohr angeordnet ist und einen Antrieb (17, 18, 19) aufweist, wobei der Antrieb an eine hydraulische Energiequelle angeschlossen ist, wobei die Energiequelle außerhalb des Luftführungsvolumens des Ansaugtraktes liegt und mindestens ein weiterer Verbraucher an ihr angeschlossen ist, **dadurch gekennzeichnet, dass** die Energiequelle aus einer Lenkhilfepumpe besteht, die zur Unterstützung der Lenkung des zur Brennkraftmaschine gehörigen Fahrzeugs vorgesehen ist, wobei am Stellelement eine Lageerkennung erfolgt und in Abhängigkeit des Betriebszustandes der Brennkraftmaschine mindestens eine Position zwischen Betätigung und Rückstellung des Stellelementes (15) angesteuert wird.

2. Saugrohrsystem nach Anspruch 1, **dadurch gekennzeichnet, dass** der Antrieb einen Zylinder (19) aufweist.

3. Saugrohrsystem nach Anspruch 2, **dadurch gekennzeichnet, dass** der Zylinder (19) eine Rückstellfeder (29) aufweist.

4. Verfahren zur Steuerung des Antriebs (17, 18, 19) gemäß einem der vorhergehenden Ansprüche, **dadurch gekennzeichnet, dass** in Abhängigkeit von dem Betriebszustand der Brennkraftmaschine ein Einlassventil (22) geöffnet und geschlossen wird, welches die Energiequelle mit dem Antrieb (17, 18, 19) verbindet, um eine Betätigung des Stellelementes (15) zu erzielen und dass ein Ablassventil (24) geöffnet und geschlossen wird, um dessen Rückstellung zu erreichen.

## Claims

1. Intake system, especially to be used in an internal combustion engine comprising an inlet (10) meeting a collecting chamber (11), the said inlet is for the combustion air, the said intake system comprising at least one outlet (13) cylinder sided which is connected to the collecting chamber by at least one intake tube (12, 12a); a movable set element (15) being arranged on the intake tube and presenting a drive (17, 18, 19); the said drive being connected to an hydraulic power source; the said power source being located outside the air conducting volume of the intake section and at least another user being connected to the said power source, **characterised in that** the power source is constituted of a steer by wire pump provided for assisting the steering of the driving machine associated to the internal combustion engine; a position detection taking place on the set element according to the driving state of the internal combustion engine and at least one position being set between the activation and readjusting of the set element (15).

2. Intake system according to claim 1, **characterised in that** the drive element presents a cylinder (19).

3. Intake system according to claim 2, **characterised in that** the cylinder (19) presents a set backspring (29).

4. Method for controlling the driving element (17, 18, 19) according to one of the preceding claims, **characterised in that** an inlet valve (22) is opened and closed according to the operation state of the internal combustion engine to obtain a movement of the set element (15) and **characterised in that** the evacuation valve (24) is opened and closed to obtain the readjusting of the said set element.

## Revendications

1. Système d'aspiration, notamment pour être utilisé dans une machine à combustion interne comprenant une entrée (10) débouchant dans une chambre de collecte (11), laquelle entrée est destinée à l'air de combustion, ledit système comprenant au moins une sortie (13) du côté du cylindre qui est reliée à la chambre de collecte par au moins un canal d'aspiration (12, 12a); un élément de réglage (15) mobile étant disposé sur le tube d'aspiration et présentant un entraînement (17, 18, 19); l'entraînement étant raccordé à une source d'énergie hydraulique; la source d'énergie étant située à l'extérieur du volume de guidage d'air du tronçon d'aspiration et au moins un autre consommateur étant raccordé à ladite source d'énergie **caractérisé en ce que** la source d'énergie est constituée d'une pompe de direction assistée qui est prévue pour assister la direction du véhicule automobile appartenant à la machine à combustion interne; une reconnaissance de situation ayant lieu sur l'élément de réglage et selon l'état de fonctionnement de la machine à combustion interne et au moins une position étant commandée entre l'actionnement et le rappel de l'élément de réglage (15).

2. Système d'aspiration selon la revendication 1, **caractérisé en ce que** l'entraînement comporte un cylindre (19).

3. Système d'aspiration selon la revendication 2, **caractérisé en ce que** le cylindre (19) comporte un ressort de réglage de rappel (29).

4. Procédé pour commander l'entraînement (17, 18, 19) conformément à une des revendications précédentes, **caractérisé en ce qu'**une soupape d'entrée (22) est ouverte et fermée selon l'état de fonctionnement de la machine à combustion interne pour obtenir un actionnement de l'élément de réglage (15) et **caractérisé en ce que** la soupape d'évacuation (24) est ouverte ou fermée pour obtenir le rappel de l'élément de réglage.
